(19) Europäisches Patentamt
European Patent Office
Office européen des brevets

(11) Veröffentlichungsnummer: **0 493 478 B1**

(12) **EUROPÄISCHE PATENTSCHRIFT**

(45) Veröffentlichungstag der Patentschrift: **27.07.94**

(51) Int. Cl.5: **B60T 8/32**

(21) Anmeldenummer: **90914522.9**

(22) Anmeldetag: **13.09.90**

(86) Internationale Anmeldenummer:
**PCT/EP90/01554**

(87) Internationale Veröffentlichungsnummer:
**WO 91/04894 (18.04.91 91/09)**

(54) **ANTIBLOCKIERREGELUNGSSYSTEM.**

(30) Priorität: **29.09.89 DE 3932568**

(43) Veröffentlichungstag der Anmeldung:
**08.07.92 Patentblatt 92/28**

(45) Bekanntmachung des Hinweises auf die
Patenterteilung:
**27.07.94 Patentblatt 94/30**

(84) Benannte Vertragsstaaten:
**DE FR GB IT**

(56) Entgegenhaltungen:
**DE-A- 3 107 115**
**DE-A- 3 537 452**
**US-A- 4 039 227**

(73) Patentinhaber: **ROBERT BOSCH GMBH**
**Postfach 30 02 20**
**D-70442 Stuttgart(DE)**

(72) Erfinder: **MÜLLER, Elmar**
**Bergweg 32**
**D-7145 Markgröningen(DE)**
Erfinder: **MÜLLER, Werner**
**Elle Cour, App. 305**
**Yokohama-shi, Nishi-ku**
**Higashi Gaoka 75(JP)**

## Beschreibung

### Stand der Technik

Aus der DE-OS 31 07 115 ist ein ABS mit Reibschwingungsunterdrückung bekannt. Es wird dort die Radgeschwindigkeit auf physikalisch unmögliche Änderungen überwacht. Wird eine solche unmögliche Änderung erkannt, so wird die gemessene Radgeschwindigkeit nicht ausgewertet, sondern ein neuer Radgeschwindigkeitswert aus dem letzten gespeicherten Radgeschwindigkeitswert vor der unmöglichen Änderung abgeleitet.

### Vorteile der Erfindung

Ausgehend von der bekannten Unterdrückung wird diese durch die erfindungsgemäße Weiterbildung verbessert und damit insbesondere für die Anwendung bei Motorrädern brauchbar gemacht.

Im realen Fahrzustand können induktiv erzeugte Geschwindigkeitssignale durch externe Störungen, z.B. Motorschwingungen, elektromagnetische Einstreuungen verfälscht werden. Gerade beim Motorrad treten diese Erscheinungen auf Grund unzureichender Dämpfung von Motorschwingungen (keine elastische Lagerung des Motors) häufiger auf und sind sogar im Stillstand zu bemerken. Dies führt zu ungewollten Ventilansteuerungen und im Extremfall zu einem ungebremsten Fahrzeug.

Bei der Erfindung wird unterschieden zwischen einer gefilterten und einer ungefilterten Geschwindigkeit. Wird während des Fahrbetriebs ein unrealistischer Geschwindigkeitssprung der ungefilterten Radgeschwindigkeit festgestellt (z. B. $\Delta V > 45$ g = 8 km/Zyklus; Zyklus = 5 ms), dann wird von Normalbetrieb auf Sonderbetrieb umgeschaltet, wobei die gefilterte Radgeschwindigkeit für die Zeitdauer dieser Geschwindigkeitssprünge z. B. um $\Delta V$ = 1 km/h je Zyklus bis zu Erreichen der Referenzgeschwindigkeit dekrementiert wird. Treten diese unplausiblen Geschwindigkeitssprünge bereits im Stillstand auf, so werden zusätzlich die Referenzgeschwindigkeit auf V = 0 km/h festgehalten. Somit wird in diesem Fall die Radgeschwindigkeiten bis V = 0 km/h dekrementiert. Durch diese Maßnahme wird vermieden, daß durch vorgetäuschten Radschlupf auf Grund von Differenzen zwischen Rad- und Referenzgeschwindigkeit eine Regelung ausgelöst wird. Resetiert wird, d.h. auf Normalbetrieb rückgeschaltet, wenn über eine bestimmte Zeitdauer an zwei Rädern in etwa gleiche Radgeschwindigkeiten festgestellt werden und keine Störungen mehr vorliegen. Dies kann beispielsweise dadurch geschehen, daß die ungefilterten Geschwindigkeiten zweier Räder durch folgenden Vergleich

$$\Delta V_{Rad1} = \Delta V_{Rad2} \pm V_{Toleranz}; \text{ mit } V_{Toleranz} \sim 3 \text{ km/h}$$

auf Parallelität abgefragt werden. Ist diese Gleichung erfüllt, wird ein Zähler inkrementiert. Bei Erreichen eines vorher festgelegten Schwellwertes, erfolgt dann der Reset.

Während dieser Phase der unplausiblen Radgeschwindigkeitssprünge werden keine Ventilansteuerungen ausgeführt und dies wird über die SILA-Blinkansteuerung dem Fahrer signalisiert.

Im Vergleich zur bekannten Reibschwingungserkennung bietet die Erfindung die Möglichkeit einer eindeutigen Resetierung der eingeleiteten Maßnahmen und während des Sonderbetriebs eine Ausklammerung des betroffenen Rades von der Regelung.

### Figurenbeschreibung

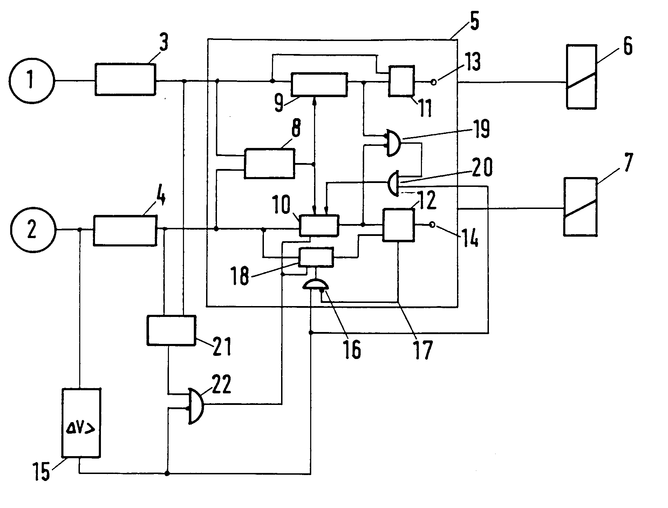

Anhang der Figur der Zeichnung wird ein Ausführungsbeispiel der Erfingung näher erläutert.

Dort sind mit 1 und 2 zwei Radgeschwindigkeitsmeßwertgeber eines Motorrads bezeichnet. Deren Signale werden über Filter 3 und 4 zur Reduzierung von überlagerten Störsignalen geführt und einer Auswerteschaltung 5 zugeführt. Aus den Radgeschwindigkeitssignalen erzeugt die Auswerteschaltung 5 Bremsdrucksteuersignale, die den Bremsdrucksteuerventilen 6 und 7 der beiden Räder zur Drucksteuerung zugeführt werden.

Die Auswerteschaltung enthält neben anderen nicht gezeigten Schaltungsteilen für die Erzeugung der Bremsdrucksteuersignale einen zweikanaligen Schlupfregler.

Dieser besteht aus einem Block 8, der aus dem schneller drehenden Rad in bekannter Weise eine Hilfsreferenz erzeugt. Deren Steigung wird den radspezifischen Referenzbildnern 9 und 10 zugeführt und dient dort zur Vorgabe der Steigungen der radspezifischen Referenzen.

Den Blocks 9 und 10 wird je ein gefiltertes Radgeschwindigkeitssignal zugeführt. Aus Steigung und Radgeschwindigkeitssignal wird jeweils die radspezifische Referenz gebildet, die dann jeweils einem Schlupfbilder 11 bzw. 12 zugeführt wird, dem auch das zugehörige gefilterte Radgeschwindigkeitssignal zugeführt wird. An den Klemmen 13 und 14 stehen Signale an, wenn das zugehörige Rad einen einen Schwellwert übersteigenden Bremsschlupf aufweist.

Gemäß der Erfindung wird nun überwacht, ob eine Radgeschwindigkeit sich mit einer physikalisch unmöglichen Änderungsgeschwindigkeit verändert. In der Zeichnung ist dies nur für den einen Kanal 2/4/10/12/14 eingezeichnet. Für die Überwachung ist der Block 15 vorgesehen, der bei Auftreten einer solchen unmöglichen Änderung ein Signal abgibt, das über ein Und-Gatter 16 einen Zähler 18 einschaltet, der nun in jedem Arbeitszyklus der Schaltung das gefilterte Radgeschwindigkeitssignalum einen Wert ΔV erniedrigt. Erreicht das Radgeschwindigkeitssignal den Referenzwert aus dem Block 10, so zeigt dies der Schlupfbildner 12 auf einer Leitung 17 an. Hierdurch wird das Und-Gatter 16 gesperrt und der Zähler 18 gestoppt, also nicht länger dekrementiert.

Tritt die unmögliche Störung im Stillstand auf, sind also beide Referenzen 0, so wird dieser Sachverhalt über Und-Gatter 19 und 20 erkannt. Das dann entstehende Ausgangssignal des Und-Gatters 20 hält nun die zugehörige Referenz auf 0. Die wegen der Störung auftretende gefilterte Radgeschwindigkeit wird auch hier in Stufen auf den Referenzwert 0 zurückgeführt.

Die oben geschilderten Maßnahmen (dekrementieren und/oder auf 0 halten), werden erst beendet, wenn die Störung verschwindet (Ausgang von Block 15 wird 0) und festgestellt wird, daß beide gefilterten Radgeschwindigkeiten über eine Zeit vorhanden sind und praktisch parallel laufen. Dies wird in einem Block 21 festgestellt, in dem die gefilterten Radgeschwindigkeitssignale verglichen werden. Sind die Radgeschwindigkeitssignale > 0 und ist die Differenz kleiner $\Delta_{Tol}$, so wird in jedem Arbeitszyklus ein Impuls an einen Zähler im Block 21 gegeben. Wenn dieser einen bestimmten Wert erreicht, gibt er ein Signal ab, das zusammen mit dem fehlenden Signal des Blocks 15 ein Abschaltsignal am Ausgang eines Und-Gatters 22 erzeugt und die Wirkung des Zählers 18 abschaltet, so daß nunmehr wieder das Radgeschwindigkeitssignal zum Schlupfbildner 12 gelangt. Außerdem wird, - wenn dies wirksam war - das Festhalten der Referenz auf 0 beendet.

## Patentansprüche

**1.** Betriebsverfahren für ein Antiblockierregelsystem mit Sensoren (1, 2) zur Ermittlung von Radgeschwindigkeiten, mit einer Auswerteschaltung (5), der die Sensorsignale nach einer Störsignalfilterung (in 3, 4) zugeführt werden und die Bremsdrucksteuersignale erzeugt und mit Bremsdrucksteuereinrichtungen (6, 7), denen die Bremsdrucksteuersignale zur Variation des Bremsdrucks in Abhängigkeit vom Radbewegungsverhalten zugeführt werden, enthaltend zusätzlich eine Erkennungsschaltung (15) zum Erkennen von unrealistischen Geschwindigkeitsänderungen der Radgeschwindigkeit und mit einer Beeinflussungsschaltung (16, 18), die von der Erkennungsschaltung (15) aktiviert wird und dann von Normalbetrieb auf Sonderbetrieb umgeschaltet wird, in dem sie den Radgeschwindigkeitswert beeinflußt und enthaltend eine Referenzbildung (9, 10) aus

wenigstens einem Radgeschwindigkeitssignal, <u>dadurch gekennzeichnet</u>, daß innerhalb des Sonderbetriebs die gefilterte Radgeschwindigkeit mit einer vorgegebenen Steigung maximal bis zum Erreichen der Größe des Referenzsignals erniedrigt wird (in 18) und dann gleich dem Referenzsignal bleibt, daß außerdem innerhalb des Sonderbetriebs bei Stillstand des Fahrzeugs das Referenzsignal beim Wert 0 festgehalten wird (in 20) und daß nach Verschwinden der unrealistischen Geschwindigkeitsänderungen (in 15) und dem Auftreten von bis auf eine Toleranz ± $V_{Tol}$ gleichen Radgeschwindigkeiten an zwei Rädern über eine vorgegebene Zeit (in 21) auf Normalbetrieb rückgeschaltet wird.

**2.** Betriebsverfahren nach Anspruch 1, dadurch gekennzeichnet, daß bei digitaler Ausbildung der Auswerteschaltung (5) die Erniedrigung der gefilterten Radgeschwindigkeit durch kleine Stufen ΔV (in 18) in den Arbeitszyklen erfolgt.

**3.** Betriebsverfahren nach einem der Ansprüche 1 oder 2, gekennzeichnet durch seine Anwendung bei Motorrädern.

## Claims

**1.** Operating method for an antilock braking system with sensors (1, 2) for determining wheel speeds, with an evaluation circuit (5) to which the sensor signals are fed after interference signal filtering (in 3, 4) and which produces brake pressure control signals and with brake pressure control devices (6, 7) to which the brake pressure control signals are fed in order to vary the brake pressure as a function of wheel movement behaviour, additionally containing a detection circuit (15) for detecting unrealistic changes in the wheel speed and with an influencing circuit (16, 18) which is activated by the detection circuit (15) and is then switched over from normal operating mode to special operating mode in which it influences the wheel speed value, and containing a reference formation (9, 10) from at least one wheel speed signal, characterized in that, within the special operating mode, the filtered wheel speed is reduced (in 18) with a predetermined gradient at maximum until the size of the reference signal is reached and then remains equal to the reference signal, in that, in addition, within the special operating mode, the reference signal is maintained at the value 0 (in 20) when the vehicle is stationary, and in that, after the unrealistic changes in speed (in 15) have disappeared and after the occurrence at two wheels of wheel speeds which are identical except for a tolerance $\pm V_{Tol}$ over a predetermined time (in 21), the system switches back to normal operating mode.

2. Operating method according to Claim 1, characterized in that when the evaluation circuit (5) is of digital design the reduction of the filtered wheel speed takes place by small increments $\Delta V$ (in 18) in the working cycles.

3. Operating method according to one of Claims 1 or 2, characterized by its application in motorcycles.

**Revendications**

1. Procédé de fonctionnement pour un système de régulation antiblocage avec des détecteurs 1 et 2, pour détecter des vitesses de roue, avec un circuit d'exploitation (5), auquel les signaux des détecteurs sont amenés après un filtrage du signal parasite (en 3, 4) et produit les signaux de commande de pression de freinage et avec des dispositifs de commande de la pression de freinage (6, 7), auxquels les signaux de commande de pression de freinage sont amenés pour faire varier la pression de freinage en fonction du mouvement de la roue, contenant en outre un circuit de détection (15) pour détecter des variations de vitesses irréalistes de la vitesse de roue et avec un circuit d'actionnement (16, 18) qui est activé par le circuit de détection (15) et que l'on commute alors de la position fonctionnement normal sur la position fonctionnement particulier, dans laquelle le circuit influence la valeur de la vitesse de roue et contenant un bloc de formation de références (9, 10) à partir d'au moins un signal de vitesse de roue, procédé de fonctionnement, caractérisé en ce que l'intérieur du fonctionnement particulier de la vitesse de roue filtrée est réduite, avec une pente prédéfinie au maximum jusqu'à ce qu'elle atteigne la grandeur du signal de référence (en 18) et reste alors égale au signal de référence, en ce qu'ensuite à l'intérieur du fonctionnement particulier, on maintient, quand le véhicule est à l'arrêt le signal de référence à la valeur zéro (en 20) et en ce qu'après la disparition des variations de vitesse non réalistes (en 15) et l'apparition de vitesses de roue égales à une tolérance près de $\pm V_{Tol}$ sur les deux roues, on remet le système en position de fonctionnement normal pour un temps prédéfini (en 21).

2. Procédé de fonctionnement selon la revendication 1, caractérisé en ce que dans le cas où le circuit d'exploitation (5) est constitué de façon numérique, la réduction de la vitesse de roue filtrée a lieu par de petites étapes $\Delta V$ (en 18) dans les cycles de travail.

3. Procédé de fonctionnement selon l'une des revendications 1 ou 2, caractérisé par son application aux motocyclettes.